## Europäisches Patentamt

## European Patent Office

## Office européen des brevets

(19)

(11) Veröffentlichungsnummer : **0 054 860**
**B1**

(12) **EUROPÄISCHE PATENTSCHRIFT**

(45) Veröffentlichungstag der Patentschrift :
07.08.85

(21) Anmeldenummer : 81110334.0

(22) Anmeldetag : 11.12.81

(51) Int. Cl.⁴ : **C 08 F291/02**, C 08 F251/02,
C 08 F283/00

(54) Thermoplastische Formmassen aus Copfropfpolymerisaten.

(30) Priorität : 23.12.80 DE 3048697

(43) Veröffentlichungstag der Anmeldung :
30.06.82 Patentblatt 82/26

(45) Bekanntmachung des Hinweises auf die Patenterteilung : 07.08.85 Patentblatt 85/32

(84) Benannte Vertragsstaaten :
DE FR GB IT

(56) Entgegenhaltungen :
EP-A- 0 009 695
DE-A- 2 542 613
FR-A- 2 305 464
US-A- 3 632 677
US-A- 4 160 758

(73) Patentinhaber : BAYER AG
Konzernverwaltung RP Patentabteilung
D-5090 Leverkusen 1 Bayerwerk (DE)

(72) Erfinder : Alberts, Heinrich, Dr.
Morgengraben 16
D-5000 Köln 80 (DE)
Erfinder : Fischer, Winfried, Dr. Bayer Japan Ltd.
Seiwa Bld.
12-15, Shiba Daimon 1-chome, Minato-ku
P.O. Box Shiba 1 59 Tokyo 105-91 (JP)
Erfinder : Leuschke, Christian
Neckarstrasse 36
D-4047 Dormagen (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

0 054 860

**Beschreibung**

Die Erfindung betrifft thermoplastische Formmassen aus Copfropfpolymerisaten, die durch Polymerisation von Vinylmonomeren, insbesondere von ungesättigten Estern, in Gegenwart von Mischungen aus

1. Elastomeren mit Glasübergangstemperaturen $\leq 0\ ^{\circ}$C,
2. Polyestern, Polyethern, Polyesterurethanen, Polyetherurethanen, Polycarbonaten oder deren Gemischen und gegebenenfalls
3. Celluloseestern aliphatischer $C_1$-$C_5$-Carbonsäuren

erhalten werden, sowie Formmassen aus Mischungen dieser Copfropfpolymerisate mit organischen Celluloseestern.

Formmassen aus Celluloseacetat können ohne Zusatz von niedermolekularen Weichmachern nicht thermoplastisch verarbeitet werden, da sich dieser Ester vor dem Erweichen zu zersetzen beginnt. Auch bei Celluloseacetopropionaten und -acetobutyraten liegen die Erweichungs- und Zersetzungstemperatur so nahe beieinander, daß auch diese Formmassen vor ihrer thermoplastischen Verarbeitung mit Weichmachern abgemischt werden müssen. Damit erreicht man die notwendige Herabsetzung der Verarbeitungstemperatur und Verarbeitungsviskosität.

Als Weichmacher für organische Celluloseester dienen vornehmlich aliphatische Ester der Phthalsäure, Adipinsäure, Azelainsäure, Sebacinsäure und Phosphosäure wie beispielsweise Dimethylphthalat, Diethylphthalat, Dibutyladipat, Dioctyladipat, Dibutylacetat, Trichlorethylphosphat und Tributylphosphat. Oft ist es auch vorteilhaft, Weichmachergemische einzusetzen.

Ferner ist es bekannt (vgl. z. B. US-PS 2 686 805, 2 815 354 und 3 051 667 und FR-PS 1 070 351), Polyester aliphatischer oder aromatischer Dicarbonsäuren mit organischen Celluloseestern abzumischen. Die erhaltenen Formmassen sind aufgrund der guten Verträglichkeit der Komponenten im allgemeinen hochtransparent, weisen aber folgende Nachteile auf : Eine drastische Abnahme von Wärmeformbeständigkeit, Härte und Biegefestigkeit mit zunehmendem Anteil an Polyester in der Mischung. Ferner werden keine Verbesserung der Kerbschlagzähigkeit mit zunehmendem Polyesteranteil und unzureichende Schlagzähigkeiten bei tiefen Temperaturen festgestellt.

Obwohl die mit Weichmachern und höhermolekularen Polyestern modifizierten Celluloseesterformmassen eine sehr gute Transparenz zeigen, wäre es wünschenswert, für manche Anwendungszwecke z. B. ihre Wärmeformbeständigkeit und Härte zu verbessern. Außerdem wandern die Weichmacher mit der Zeit an die Oberfläche der Formkörper, so daß z. B. Folien aus modifizierten Celluloseestern nicht zur Verpackung von bestimmten Lebensmitteln verwendet werden können.

Aus der deutschen Auslegeschrift 1 303 219 sind Abmischungen aus organischen Celluloseestern, niedermolekularen Weichmachern und Olefinpolymerisaten bekannt. Bei einem höheren Gehalt an Olefinpolymerisaten sind jedoch solche Formmassen nicht mehr transparent. Außerdem dienen hier herkömmliche niedermolekulare Ester mit den bekannten Nachteilen als Weichmacher.

Die Verwendung polymerer Weichmacher für Cellulosemischester ist ebenfalls bekannt. In der US-Patentschrift 3 682 850 werden thermoplastische Mischungen aus 40 bis 90 Gew.-% Celluloseestern und 10 bis 60 Gew.-% eines Ethylen-Vinylacetatcopolymeren mit einem Vinylacetatgehalt von 75 bis 99 Gew.-% beschrieben, die durch gute mechanische Festigkeitswerte und hohe Transparenz gekennzeichnet sind.

Ethylen-Vinylacetatcopolymere mit mehr als 75 Gew.-% eingebautem Vinylacetat weisen Glasübergangstemperaturen $T_G \geq +10\ ^{\circ}$C auf, d. h. eine Elastifizierung der Cellulose-esterabmischungen bei tiefen Temperaturen (0 $^{\circ}$C bis $-50\ ^{\circ}$C) ist in derartigen Systemen nicht zu erwarten.

Es wurde nun gefunden, daß die vorerwähnten Nachteile überwunden und hochtransparente, weiche und flexible oder harte und zähe Formmassen erhalten werden, wenn auf Mischungen aus

1. Elastomeren mit Glasübergangstemperaturen $\leq 0\ ^{\circ}$C und
2. Polyestern, Polyesterurethanen, Polyethern, Polyetherurethanen und Polycarbonaten oder ihren Gemischen und gegebenenfalls
3. Celluloseestern aliphatischer $C_1$-$C_5$-Carbonsäuren als Pfropfsubstrat,

Vinylmonomere, vorzugsweise Vinylester oder (Meth)Acrylsäure-$C_1$-$C_{18}$-Alkylester oder ihre Gemische aufgepfropft werden. Durch die Pfropfung werden gleichzeitig die polymeren Komponenten des Pfropfsubstrates ganz oder teilweise miteinander verbrückt. Ferner wurde gefunden, daß Abmischungen aus diesen Copfropfpolymeren und organischen Celluloseestern ausgezeichnete Verträglichkeit und sehr gute mechanische Festigkeitswerte aufweisen.

Gegenstand der Erfindung sind somit thermoplastische Formmassen, bestehend aus :

1) 1 bis 99, vorzugsweise 15 bis 95 Gew.-% eines Pfropfsubstrates, das sich zusammensetzt aus
a) 1 bis 99,5, vorzugsweise 50 bis 97 Gew.-% eines Elastomeren mit einer Glasübergangstemperatur $\leq 0\ ^{\circ}$C und

2

b) 0,5 bis 99, vorzugsweise 3 bis 50 Gew.-% eines oder mehrerer Polyester, Polyether, Polyesterurethane, Polyetherurethane, Polycarbonate oder ihrer Gemische und gegebenenfalls

c) 0 bis 95, vorzugsweise 0 bis 45 Gew.-% eines Celluloseesters einer oder mehrerer aliphatischer $C_1$-$C_5$-Carbonsäuren, und

2) 99-1, vorzugsweise 5-85 Gew.-% auf-polymerisierten Einheiten von

a) 100-80 Gew.-%, Vinyl-estern und/oder $C_1$-$C_{18}$-Alkylestern der Acryl- und/oder Methacrylsäure und

b) 0 bis 20 Gew.-% $C_2$-$C_4\alpha$-Olefinen,

wobei mindestens ein Teil der polymeren Komponenten des Pfropfsubstrates über polymerisierte Einheiten der Pfropfmonomeren untereinander verbrückt ist und wobei die Summe der Komponenten 1 und 2, 1a) bis 1c) und 2a) und 2b) jeweils 100 Gew.-% beträgt.

Ferner sind Gegenstand der Erfindung thermoplastische Formmassen, bestehend aus

I) 1 bis 99, vorzugsweise 50 bis 99 Gew.-% eines Celluloseesters einer oder mehrerer aliphatischer $C_1$-$C_5$-Carbonsäuren und

II) 99 bis 1, vorzugsweise 50 bis 1 Gew.-% eines Copfropfpolymerisates aus

1) 1 bis 99, vorzugsweise 15 bis 95 Gew.-% eines Pftropfsubstrates, das sich zusammensetzt aus

a) 1 bis 99,5 vorzugsweise 50 bis 97 Gew.-% eines Elastomeren mit einer Glasübergangstemperatur $\leq 0$ °C und

b) 0,5 bis 99, vorzugsweise 3 bis 50 Gew.-% eines oder mehrerer Polyester, Polyether, Polyesterurethane, Polyetherurethane, Polycarbonate oder ihrer Gemische und gegebenenfalls

c) 0 bis 95, vorzugsweise 0 bis 45 Gew.-% eines Celluloseesters einer oder mehrerer aliphatischer $C_1$-$C_5$-Carbonsäuren, und

2) 99-1, vorzugsweise 5-85 Gew.-% auf-polymerisierten Einheiten von

a) 100 bis 80 Gew.-% Vinylestern und/oder $C_1$-$C_{18}$-Alkylestern der Acryl- und/oder Methacrylsäure und

b) 0 bis 20 Gew.-% $C_2$-$C_4$-$\alpha$-Olefinen,

wobei die Summe der Komponenten I und II, 1 und 2, 1a) bis 1c) und 2a) und 2b) jeweils 100 Gew.-% beträgt und wobei mindestens ein Teil der polymeren Komponenten des Pfropfsubstrates über polymerisierte Einheiten der Pfropfmonomeren untereinander verbrückt ist.

Geeignete Celluloseester zur Herstellung der erfindungsgemäßen Formmassen sind Celluloseester aliphatischer Carbonsäuren mit 1 bis 5 C-Atomen, vorzugsweise Celluloseacetat, -acetopropionat und -acetobutyrat.

Die Verfahren zur Herstellung von organischen Celluloseestern sind seit langem bekannt und werden beispielsweise in Ullmanns Encyklopädie der technischen Chemie (Verlag Urban und Schwarzenberg, München-Berlin, 1963) im 5. Band auf den Seiten 182 bis 201 beschrieben.

Bevorzugte Celluloseacetobutyrate enthalten

40 bis 50 Gew.-% Buttersäuregruppen und
15 bis 26 Gew.-% Essigsäuregruppen.

Besonders bevorzugt für die erfindungsgemäßen Formmassen eignen sich Celluloseacetobutyrate mit folgender Zusammensetzung :

42 bis 46 Gew.-% Buttersäuregruppen und
18 bis 22 Gew.-% Essigsäuregruppen.

Bevorzugte Celluloseacetopropionate enthalten im allgemeinen

50 bis 66 Gew.-% Propionsäuregruppen und
1 bis 12 Gew.-% Essigsäuregruppen

und besonders bevorzugte Celluloseacetopropionate haben folgende Zusammensetzung :

54 bis 66 Gew.-% Propionsäuregruppen und
4 bis 9 Gew.-% Essigsäuregruppen.

Von den Celluloseacetaten werden bevorzugt Sekundär-Celluloseacetate eingesetzt.

Die relativen Viskositäten ($\eta_{rel}$) von 2 gew.-%igen Lösungen der verwendeten aliphatischen Celluloseester in Aceton liegen bei 20 °C zwischen 2,5 und 6,0, bevorzugt zwischen 3,5 und 5,0 [dl/g].

Die für die Herstellung der Copfropfpolymerisate eingesetzten Celluloseester stimmten im allgemeinen in ihrer Zusammensetzung mit den für die Herstellung der Abmischungen eingesetzten Celluloseestern überein, es ist aber selbstverständlich auch möglich, für die Abmischung andere Celluloseester als in den Copfropfpolymeren enthalten sind, einzusetzen.

3

Als Elastomere mit Glasübergangstemperaturen $T_g \leqslant 0\,°C$ sind die bekannten 1,3-Butadien- oder Isoprenhomopolymerisate, -copolymerisate oder -blockpolymerisate geeignet. Es werden vor allem Copolymerisate von Butadien oder Isopren mit bis zu 30 Gew.-% Styrol oder mit $C_2$-$C_6$-$\alpha$-Olefinen wie Ethylen, Propylen oder Isobutylen verwendet. Ferner sind Copolymerisate mit Methylmethacrylat oder (Meth)-Acrylnitril geeignet. Die Olefincopolymerisate können statistisch oder alternierend aufgebaut sein. Als Blockcopolymerisate sind Zwei- oder Dreiblockcopolymerisate von Styrol und Butadien oder Isopren besonders geeignet.

Als Elastomere mit Glasübergangstemperaturen $T_g \leqslant 0\,°C$ sind solche Elastomere bevorzugt, deren Hauptketten keine ungesättigten C-C-Bindungen enthalten. Entsprechende Elastomere sind Ethylen-Copolymere mit $C_3$-$C_8$-$\alpha$-Olefinen, mit Vinylestern, vorzugsweise Vinyl-acetat und Vinylpropionat, mit $C_1$-$C_{18}$-Alkylestern der Acrylsäure und Methacrylsäure oder ungesättigten organischen Vinylfluoriden, vorzugsweise Tetrafluorethylen oder Vinylidenfluorid, ferner Homo- oder Copolymerisate von $C_1$-$C_{18}$-Alkylestern der Acryl- oder Methacrylsäure mit bis zu 75 Gew.-% eingebauten Vinylestern, ferner hochmolekulare, elastomere Polyester und Polyether oder Polyurethan-elastomere.

Die Ethylen-Vinylestercopolymeren werden nach den bekannten Verfahren der Hoch- oder Mitteldrucksynthese in Substanz, Lösung oder Emulsion hergestellt.

Als Vinylester kommen organische Vinylester von gesättigten, gegebenenfalls durch Halogen, insbesondere durch Chlor, substituierten aliphatischen Monocarbonsäuren mit 1 bis 18 C-Atomen oder aromatischen Monocarbonsäuren mit 7 bis 11 C-Atomen in Frage. Namentlich seien genannt : Vinylformiat, Vinylacetat, Vinylpropionat, Vinylchlorpropionat, Vinylbutyrat, Vinylisobutyrat, Vinylcapronat, Vinyllaurinat, Vinylmyristinat, Vinylstearat, Vinylbenzoat, vorzugsweise Vinylacetat.

Die nach dem Verfahren der Hochdrucksynthese hergestellten Ethylen-Vinylester Copolymerisate besitzen Schmelzindexwerte — nach DIN 53 735 bei 190 °C und einer Belastung von 2,16 kp — zwischen 0,1 und 1 000, vorzugsweise zwischen 1,0 und 10, insbesondere von 3,5 bis 6. Die in Tetralin bei 120 °C gemessenen Grenzviskositäten liegen im allgemeinen zwischen 0,1 und 1,5 [dl/g]. Die nach der Methode der Lichstreuung ermittelten Molukulargewichte liegen vorzugsweise zwischen 2 000 und 1 Million. Die nach der Beziehung $M_w/M_n$-1 definierte Uneinheitlichkeit U (G. Schulz, z. phys. Chem. (B) 43 (1939) Seiten 25 bis 34) liegt im Bereich von 1 bis 30. Diese Copolymerisate sind bevorzugt in Kohlenwasserstoffen oder Alkoholen löslich.

Die beispielsweise nach dem Verfahren der Lösungs- oder Emulsionspolymerisation hergestellten Ethylen-Vinylester-Copolymerisate, die 5 bis 75 Gew.-% Vinylester, vorzugsweise 25 bis 55 Gew.-% Vinylester enthalten, besitzen Schmelzindexwerte (190 °C-2,16 kp), die größer als 100 sein können, vorzugsweise liegt der Schmelzindexbereich unter 15, insbesondere zwischen 0,5 und 5. Die mittels Lichstreuung gemessenen Molekulargewichte liegen vorzugsweise zwischen 5 000 und einer Million. Die Uneinheitlichkeit U beträgt vorzugsweise 1 bis 12. Die Copolymerisate sind löslich in Kohlenwasserstoffen und Alkoholen und besitzen vorzugsweise Grenzviskositäten in Toluol zwischen 0,5 und 2,5 [dl/g].

Die Herstellung der erfindungsgemäß einzusetzenden Pfropfgrundlage auf Basis von (Meth)Acrylsäureestercopolymeren erfolgt nach den an sich bekannten Methoden in gebräuchlicher Art und Weise. Die (Meth) Acrylsäureestercopolymeren sind vernetzt oder unvernetzt und weisen Glastemperaturen unter 0 °C, vorzugsweise unter − 20 °C, insbesondere unter − 30 °C auf. Die Ermittlung der Glasübergangstemperatur der (Meth)Acrylsäureester-Polymerisate kann z. B. nach der DSC-Methode (K. H. Illers, Makromol. Chemie 127 (1969), S. 1) erfolgen. Für die Herstellung der Polymeren kommen (Meth)Acrylsäurealkylester mit 1 bis 18 C-Atomen, vorzugsweise mit 4 bis 8 C-Atomen im Alkylrest in Betracht. Besonders genannt seien Acrylsäure-n-butylester und Acrylsäure-2-ethylehexylester. Die (Meth)Acrylsäureester können bei der Herstellung der als Pfropfgrundlage dienenden (Meth)Acrylsäureester-Polymerisate allein oder auch in Mischung miteinander eingesetzt werden. Ferner ist es möglich, statt (Meth)Acrylsäureester (Co)polymerisaten auch Copolymere mit anderen Vinylmonomeren als Pfropfgrundlage zu verwenden. Als Vinylmonomere besonders geeignet sind Vinylester, Vinylether, Vinylhalogenide und Vinylaromaten. Besonders genannt seien Vinylacetat, Vinyladipat, Vinylstearat als Vinylester, $C_1$-$C_{18}$-Alkyl-Vinylether, insbesondere Ethyl-, n-Butyl- und 2-Ethylhexylvinylether, Vinylchlorid, Vinylfluorid und Vinylidenfluorid, Styrol und $\alpha$-Methylstyrol. Falls gewünscht, können auch Copolymere mit (Meth)Acrylnitril und (Meth)acrylsäure als Pfropfgrundlage verwendet werden. Die nach speziellen Verfahren zugänglichen Copolymeren von (Meth)Acrylsäureestern mit $C_2$-$C_6$-$\alpha$-Olefinen und Dienen sind ebenfalls geeignet. Als $\alpha$-Olefin besonders geeignet ist Ethylen, als Diene werden Butadien und Isopren verwendet. Die löslichen Copolymeren werden in den an sich bekannten Lösungsmitteln, vorzugsweise Alkoholen, oder in Substanz hergestellt, die vernetzten Copolymeren vorzugsweise in Emulsion.

Um vernetzte (Meth)Acrylsäureester-Polymerisate zu erhalten, kann z. B. nach den in DE-PS 1 260 135 oder DE-OS 2 826 925 beschriebenen Verfahren vorgegangen werden.

Für die Herstellung der Copfropfpolymerisate kommen als Vinylester organische Vinylester von gesättigten, gegebenenfalls durch Halogen, insbesondere durch Chlor, substituierten aliphatischen Monocarbonsäuren mit 1-18 C-Atomen oder aromatischen Monocarbonsäuren mit 7-11 C-Atomen in Frage. Namentlich seien genannt : Vinylformiat, Vinylacetat, Vinylpropionat, Vinylchlorpropionat, Vinylbutyrat, Vinylisobutyrat, Vinylcapronat, Vinyllaurinat, Vinylmyristinat, Vinylstearat, Vinylbenzoat, vorzugsweise Vinylacetat.

Die nach dem Verfahren der Hochdrucksynthese hergestellten Ethylen (Meth)Acrylsäureester-Copolymerisate besitzen Schmelzindexwerte — nach DIN 53 735 bei 190 °C und einer Belastung von 2,16 kp — zwischen 0,1 und 1 000, vorzugsweise zwischen 1,0 und 20. Die in Tetralin bei 120 °C gemessenen Grenzviskositäten liegen im allgemeinen zwischen 0,1 und 1,5 [dl/g]. Die nach der Methode der Lichtstreuung ermittelten Molekulargewichte liegen vorzugsweise zwischen 2 500 und 1 Million. Die nach der Beziehung $M_W/M_n$-1 definierte Uneinheitlichkeit U (G. Schulz, Z. phys. Chem. (B) 43 (1939) Seiten 25-34) liegt im Bereich von 1 bis 30. Diese Copolymerisate sind in Kohlenwasserstoffen, Alkoholen oder Estern löslich.

Die beispielsweise nach dem Verfahren der Lösungs- oder Emulsionspolymerisation hergestellten (Meth)Acrylsäure-$C_1$-$C_{18}$-Alkylester-Copolymerisate, besitzen Schmelzindexwerte (190 °C-2, 16 kp), die größer als 100 sein können, vorzugsweise liegt der Schmelzindexbereich unter 35. Die mittels Lichtstreuung gemessenen Molekulargewichte liegen vorzugsweise zwischen 4 000 und einer Million. Die Uneinheitlichkeit U beträgt im allgemeinen 1 bis 15. Die Copolymerisate sind löslich in Kohlenwasserstoffen, Alkoholen und Estern und besitzen vorzugsweise Grenzviskositäten zwischen 0,5 und 2,5 [dl/g] in Toluol.

Die für die Copfropfpolymerisation eingesetzten aliphatischen oder gemischt aliphatisch-aromatischen Polyester werden in an und für sich bekannter Weise durch Veresterungs- oder Umesterungsreaktionen von Gemischen aus aliphatischen oder aromatischen Dicarbonsäuren, ihren Anhydriden oder Estern und aliphatischen Dialkoholen hergestellt, vergl. Ullmanns Enzyklopädie der technischen Chemie, 14. Band, Urban und Schwarzenberg, München, 1963, S. 80 ff.

Als Dicarbonsäuren werden vorzugsweise eingesetzt : Adipinsäure, Sebacinsäure, Terephthalsäure, Phthalsäure, Isophthalsäure, Maleinsäure, Fumarsäure und Itaconsäure ; als mehrwertige Alkohole werden vorzugsweise eingesetzt : Ethylenglykol, Propandiol-1,2 und -1,3, Butandiol-1,3 und -1,4, Hexandiol-1,6, 2,2-Dimethylpropandiol-1,3 und Polyether-Alkohole, die 2-7 Ethersauerstoffatome im Molekül enthalten (vgl. DE-AS 10 54 620).

Für verzweigte Polyester werden höherfunktionelle Carbonsäuren oder Alkohole eingesetzt ; erwähnt seien Glycerin, 1,1,1-Trimethylolpropan, Hexantriol und Pentaerythrit, (vgl. z. B. DE-PS 1 105 160 und DE-AS 1 029 147). Die Molekulargewichte der Polyester liegen im allgemeinen zwischen 800 und 10 000, können aber auch wesentlich höher sein ; i. a. liegen ihre OH-Zahlen zwischen 0,1 und 80 und ihre Restwassergehalte unter 0,1 %. Falls gewünscht, können auch spezielle hochmolekulare Polyester mit z. B. enger Molekulargewichtsverteilung eingesetzt werden, die durch Polymerisation von Lactonen, wie z. B. β-Propiolacton, γ-Butyrolacton oder ε-Caprolacton erhalten werden, oder deren Synthese durch Copolymerisation von Epoxiden mit cyclischen Anhydriden erfolgte, vgl. K. Hamann, Makrom. Chem. 51 (1962) 53 und R. F. Fischer, J. Poly. Sci. 44 (1960) 155.

Geeignete Polyester im Sinne der Erfindung sind auch Polycarbonate oder Mischesterpolycarbonate, die durch Umesterungsreaktion mit z. B. Diphenylcarbonat erhalten werden können ; beispielhaft seien aufgeführt Butylenglykolpolycarbonat und Hexan-diol-1,6-polycarbonat. Entsprechende reinaliphatische Polycarbonate sind auch durch ringöffnende Polymerisation von z. B. Glykolcarbonat oder durch Copolymerisation von Epoxiden mit Kohlendioxid erhältlich.

Die für die Copfropfpolymerisation eingesetzten aliphatischen Polyether weisen in der Regel zwei bis acht, vorzugsweise zwei bis drei, Hydroxylgruppen auf und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von $BF_3$ oder durch Anlagerung dieser Epoxide, gegebenenfalls im Gemisch oder nacheinander, an Startkomponenten mit reaktionsfähigen Wasserstoffatomen wie Alkohole oder Amine, Wasser, Ethylenglykol, Propylenglykol-(1,3) oder -(1,2), Trimethylolpropan, 4,4'-Dihydroxyglykol-(1,3) oder -(1,2)-Trimethylolpropan, 4,4'-Dihydroxydiphenylpropan, Anilin, Ammoniak, Ethanolamin oder Ethylendiamin hergestellt. Auch Sucrosepolyether, wie sie z. B. in der DE-AS 1 176 358 und 1 064 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z. B. durch Polymerisation von Styrol und Acrylnitril in Gegenwart von Polyethern entstehen (US-PS 3 383 351, 3 304 273, 3 523 093 und 3 110 695, DE-PS 1 152 536), sind ebenfalls geeignet, ebenso OH-Gruppen aufweisende Polybutadiene.

Geeignet sind auch Polythioether, von denen insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt seien. Je nach den Co-Komponenten handelt es sich bei den Produkten um Polythiomischether, Polythioetherester oder Polythioetheresteramide.

Die OH-Funktionen der eingesetzten Polyether oder Polyester können vor, während oder nach der Herstellung der Copfropfpolymeren acyliert oder durch Umsetzung mit Mono-, Di- oder Polyisocyanaten urethanisiert werden. Die Acylierung kann mit Carbonsäuren, Carbonsäurehalogeniden oder Carbonsäureanhydriden erfolgen. Selbstverständlich ist auch eine Umesterung mit Carbonsäureestern oder Carbonaten möglich. Bevorzugt wird die Acylierung mit Acetanhydrid durchgeführt. Die Urethanisierung kann prinzipiell mit den in der Technik bekannten Isocyanaten durchgeführt, werden. Bevorzugte Isocyanate sind Phenylisocyanat, Cyclohexylisocyanat, Alkylisocyanate wie Methyl-, Ethyl-, Propyl-, Isopropyl oder Butylisocyanat, Methoximethylisocyanat, 1,4-Toluylendiisocyanat, 1,2-Tolylendiisocyanat, Hexamethylendiisocyanat und Isophorondiisocyanat.

Als Monomere zur Herstellung der Copfropfpolymerisate werden in erster Linie Vinylester und/oder Alkylester der (Meth)Acrylsäure eingesetzt. Geeignet sind die $C_1$-$C_{14}$-, vorzugsweise die $C_1$-$C_4$-Alkylester der Acryl- und/oder Methacrylsäure wie Methyl(meth)acrylat, n-Butyl- und Isobutyl(meth)acrylat und 2-Ethylhexyl(meth)acrylat.

Geeignete Vinylester sind die bereits weiter oben beschriebenen Vinylester aliphatischer oder aromatischer Monocarbonsäuren, vorzugsweise Vinylacetat.

Weitere geeignete Monomere sind $C_2$-$C_4$-$\alpha$-Olefine wie Ethylen, Propylen und Isobutylen sowie gegebenenfalls Acrylsäure und Methacrylsäure.

Falls keine transparenten Pfropfcopolymeren gewünscht werden, können auch Vinylaromaten wie Styrol oder $\alpha$-Methylstyrol, gegebenenfalls in Abmischung mit den (Meth)Acrylestern eingesetzt werden.

Die Pfropfpolymerisation wird in Lösung oder in Masse durchgeführt. Als Lösungsmittel seien genannt Kohlenwasserstoffe wie Benzol, Toluol, Xylol, Alkohole wie Methanol, Ethanol, Propanol, iso-propanol, n-Butanol, tert.-Butanol, chlorierte Kohlenwasserstoffe wie Chlorbenzol, Methylenchlorid, Tetrachlorethylen, Ester wie Essigsäuremethyl-, -ethyl- oder -butylester und Eisessig oder ihre Gemische.

Das Lösen der Pfropfsubstrate kann in bekannter Weise im ausgewählten Lösungsmittelsystem durchgeführt werden. Man kann selbstverständlich zunächst die Lösung des einen Pfropfsubstrates herstellen und dann in dieser Lösung oder in einem beliebigen, mit dem ersten Lösungsmittel mischbaren Lösungsmittel, das zweite Polymer auflösen und sodann die beiden Mischungen vereinigen und die so erhaltene homogene Lösung für die Pfropfreaktion einsetzen. Die Pfropfpolymerisation wird bevorzugt in homogener Phase durchgeführt, kann aber prinzipiell auch in heterogener Phase erfolgen. Es ist auch durchaus möglich, zunächst eine homogene Phase aus Pfropfsubstrat, Vinylmonomeren und gegebenenfalls Lösungsmittel herzustellen, die Lösung in Wasser zu dispergieren und dann gegebenenfalls nach Zusatz des Katalysators zu polymerisieren. Die polymerisation kann kontinuierlich oder diskontinuierlich erfolgen.

Die Pfropfreaktion kann auch mit oder ohne Lösungsmittel in Polymerisationsschnecken durchgeführt werden, und das Abdampfen des Lösungsmittels oder der Restmonomeren aus dem Pfropfpolymerisationsansatz in Ausdampfschnecken, Dünnschichtverdampfern oder Sprühtrocknern erfolgen.

Die Polymerisation wird bei Temperaturen zwischen $-20$ und $+250\,°C$, vorzugsweise von $+30$ bis $+180\,°C$ und bei Drucken zwischen Normaldruck bis 300 bar, vorzugsweise bis 25 bar durchgeführt.

Die Polymerisationskatalysatoren können vor, während oder nach dem Löse- bzw. Mischvorgang dem Polymerisationsansatz zugefügt werden. Vorzugsweise werden die Katalysatoren nach Herstellung der homogenen Pfropfsubstratlösung mit den Monomeren oder getrennt von den Monomeren in die Reaktionsmischung eingetragen.

Die Polymerisationskatalysatoren werden zweckmäßigerweise in einer Menge von 0,001 bis 2 Gew.-%, bezogen auf die Summe von Pfropfsubstrat und Pfropfmonomeren eingesetzt. Diese Mengen können selbstverständlich weit überschritten werden.

Als Polymerisationskatalysatoren können Per- oder Azoverbindungen oder Radikale liefernde hochsubstituierte Ethanderivate wie z. B. Benzpinakol, verwendet werden. Beispielhaft seien genannt: Benzoylperoxid, tert.-Butylperpivalat, Lauroylperoxid, tert.-Butylperoctoat, tert.-Butylperbenzoat, di-tert.-Butylperoxid, tert.-Butylperisononanat, Diisopropylpercarbonat, Dicyclohexylpercarbonat, Dicumylperoxid, tert.-Butylperneodecanoat, Azobisisobuttersäurenitril oder Ester der Azobisisobuttersäure wie z. B. deren Bis-ethylester.

Initiatorradikale können ferner mit bekannten Redoxsystemen oder auch mit Hilfe von UV-Strahlung, aktinischem Licht oder beschleunigten Elektronen erzeugt werden. Bei der Herstellung der für die Abmischungen eingesetzten Copfropfpolymeren werden die eingesetzten Monomeren sowohl auf den Celluloseester als auch auf das Ethylenvinylestercopolymerisat aufgepfropft unter bildung von Copfropf-polymerisaten, die über polymerisierte Einheiten der Monomeren querverbrückt sind. Diese Querverbrückung ist aufgrund polymeranalytischer unterschungen der Pfropfpolymeren nachgewiesen.

Diese neuartige Querverbindung der an und für sich zur Entmischung neigenden Ausgangspolymeren macht die gefundene außergewöhnlich gute Verträglichkeit der Copfropfpolymeren mit den organischen Celluloseestern verständlich.

Die Herstellung der Abmischungen kann nach bekannten Verfahren über eine Lösung und Aufarbeitung der Lösung durch Fällung und Trocknung oder durch Ausdampfen der Lösungsmittel über Ausdampfschnecken, Dünnschichtverdampfer, Schlangenrohrverdampfer oder Sprühtrockner erfolgen. Ferner können die Abmischungen in der Schmelze auf einer Walze, in Schneckenmaschinen oder Knetern hergestellt werden.

Die erfindungsgemäßen Formmassen können gegebenenfalls noch mit niedermolekularen Weichmachern modifiziert werden.

Geeignete niedermolekulare Weichmacher sind Dimethylphthalat, Diethylphthalat, Triphenylphosphat, Methyl-ethylenglykolphthalat, Di-n-butylsebacat, Ethyl-butylenglykolphthalat, Butyl-butylenglykolphthalat, Dibutylphthalat, Dioctyladipat, Dioctylphthalat, Butylbenzylphthalat und Triacetin.

Die erfindungsgemäßen Formmassen können außerdem Additive enthalten, z. B. um die Polymermischungen zu färben, zu pigmentieren, um ihre Oxidations- oder Lichtbeständigkeit zu verbessern oder um die Entflammbarkeit zu verringern.

Die erfindungsgemäßen Formmassen aus den Copfropfpolymeren und organischen Celluloseestern zeigen einen bemerkenswerten Anstieg der nach DIN 53 453 gemessenen Kerbschlagzähigkeit. Außerdem zeichnen sie sich durch eine verbesserte Formbeständigkeit in der Wärme aus, die z. B. nach DIN 53 460 als Vicat-Erweichungstemperatur gemessen wird. Die Vicat-Erweichungstemperaturen liegen bis zu 50 °C über den Erweichungstemperaturen der mit niedermolekularen Weichmachern modifizierten Celluloseestern.

Gegenüber diesen herkömmlichen Celluloseester-Form-massen zeigen die erfindungsgemäßen Formmassen außerdem noch verbesserte mechanische Eigenschaften wie beispielsweise eine Erhöhung der Härte, der Zugfestigkeit, der Biegefestigkeit und des Elastizitätsmoduls.

Der bekannte Effekt der sogenannten Weichmacherwanderung tritt bei Abmischungen aus organischen Celluloseestern und den Copfropfpolymerisaten nicht auf, wodurch solche Formmassen auch beispielsweise für Anwendungen, die einen Kontakt mit Lebensmitteln schaffen, besonders gut geeignet sind.

Die erfindungsgemäßen Polymermischungen lassen sich problemlos auf bekannten Extrudern und Spritzgußmaschinen kontinuierlich und diskontinuierlich verarbeiten und zeigen dabei eine gute Fließfähigkeit.

Es lassen sich Formkörper jeder Art herstellen sowie Acetatseide, Blockcetat, Folienträger für Sicherheitsfilme, Elektroisolierfolien und Lacke.

Die verbesserte Heißluft- und Alterungsbeständigkeit der Produkte macht auch ihren Einsatz für Außenanwendungen möglich.

Die folgenden Beispiele erläutern die Erfindung. Prozentangaben beziehen sich stets auf das Gewicht.

Das in den folgenden Beispielen verwendete Ethylen-Vinylacetatcopolymerisat (EVA) enthält 45 Gew.-% eingebautes Vinylacetat und weist eine Grenzviskosität $\eta = 1,4$ [dl/g] auf.

Der in den Beispielen verwendete Polyester 1 ist ein Kondensationsprodukt aus Adipinsäure und Diethylenglykol mit einer OH-Zahl von 55 und einer Säurezahl < 1.

Polyester 2 ist ein Kondensationsprodukt aus Adipinsäure, Ethylenglykol und Butylenglykol mit einer OH-Zahl von 38 und einer Säurezahl <1. Polyester 3 ist ein Kondensationsprodukt aus Adipinsäure, Isophthalsäure, Neopentylglykol und Ethylenglykol mit einer OH-Zahl von 100 und einer Säurezahl von 25.

Polyether 1 ist ein Polyethylenglykol vom Molekulargewicht 20 000.

Ferner bedeutet in den Beispiel : CB = Celluloseacetobutyrat mit 45 % Buttsäure- und 19 % Essigsäuregruppen. CP = Celluloseacetopropionat mit 57,5 % Propionsäure- und 5,5 % Essigsäuregruppen.

## Herstellung der Copfropfpolymerisate

## Beispiel 1

In einem 40-l-Autoklaven, der mit Ankerrührer und Zudosiermöglichkeit für verschiedene Lösungsmittel versehen und dessen Innentemperatur exakt über ein Heiz/Kühlmantelsystem zu steuern ist, werden unter Stickstoffatmosphäre 4 000 g eines Ethylen-Vinylacetatcopolymeren (EVA) mit 45 Gew.-% eingebautem Vinylacetat und einer Mooney-Viskosität von 20, 500 g eines Celluloseacetopropionats, enthaltend 57,7 Gew.-% Propionsäure- und 5,5 Gew.-% Essigsäuregruppen, 500 g des aliphatischen Polyesters 1 aus Adipinsäure und Diethylenglykol mit einer OH-Zahl von 55 und einer Säurezahl < 1, 1 500 g Vinylacetat und 13 500 g tert. Butanol eingefüllt. Der Autoklaveninhalt wird auf 110 °C erwärmt und 1 Std. bei 110 °C gerührt. Dann wird eine Lösung aus 3 000 g Vinylacetat, 22 g Dibenzoylperoxid und 4 000 g tert. Butanol innerhalb von 3 Stunden hinzugegeben. Man rührt anschließend noch 3 Stunden bei 110 °C nach. Der Ansatz wird nach Vermischen mit 500 g einer 5 %igen Lösung von 2,6-Di-tert.-butyl-p-kresol über eine Ausdampfschnecke aufgearbeitet. Das erhaltene Produkt hat eine Grenzviskosität [$\eta$] von 1,15 [dl/g].

Die Zusammensetzung der Probe ist :

42 Gew.-% EVA, 5,5 Gew.-% Celluloseacetopropionat, 5,5 Gew.-% Polyester, 47 Gew.-% polymerisierte Einheiten aus Vinylacetat.

Eine aus dem Pfropfprodukt bei 170 °C und 200 bar Preßdruck hergestellte Preßplatte ist völlig farblos und hochtransparent und zeigt keinerlei Weißbruch bei Dehnungsbeanspruchungen.

In Anlehnung an das im Beispiel 1 beschriebene Verfahren werden die in Tabelle 1 aufgeführten Copfropfpolymerisate der folgenden Zusammensetzung hergestellt :

## Tabelle 1

| Bei-spiel | EVA [%] | CB [%] | CP [%] | Vinyl-acetat [%] | Polyester [%] | | | Polyether [%] 1 |
|---|---|---|---|---|---|---|---|---|
| | | | | | 1 | 2 | 3 | |
| 2 | 35,5 | 11,8 | – | 47,4 | 5,3 | – | – | – |
| 3 | 44 | 14,5 | – | 40,2 | 1,3 | – | – | – |

7

(Fortsetzung)

| Bei-spiel | EVA [%] | CB [%] | CP [%] | Vinyl-acetat [%] | Polyester [%] | | | Polyether [%] |
|---|---|---|---|---|---|---|---|---|
| | | | | | 1 | 2 | 3 | 1 |
| 4 | 37,9 | - | 12,6 | 43,9 | 5,6 | - | - | - |
| 5 | 40 | - | 10 | 45 | 5 | - | - | - |
| 6 | 40 | 10 | - | 45 | 5 | - | - | - |
| 7 | 40 | - | - | 45 | 15 | - | - | - |
| 8 | 40 | - | - | 45 | - | 15 | - | - |
| 9 | 40 | - | - | 45 | - | - | - | 15 |
| 10 | 40 | - | - | 45 | - | - | 15 | - |

Beispiel 11

In einen 40-l-Rührautoklaven werden 4 000 g EVA, 500 g. CP, 500 g Polyester 1 und 50 g Hexamethylendiisocyanat, 1 500 g Vinylacetat und 13 500 g tert. Butanol eingefüllt. Der Autoklav wird luftfrei gespült und auf 110 °C erwärmt. Man rührt 1 Stunde bei einer Reaktorinnentemperatur von 110 °C. Dann wird eine Lösung 1 innerhalb von 3 Stunden hinzugepumpt. Lösung 1 : 4 000 g tert. Butanol, 3 000 g Vinylacetat und 16,5 g Benzoylperoxid. Anschließend wird 3 Stunden bei 110 °C nachgerührt. Der Ansatz wird mit einer Lösung 2 aus 18 g 2,6-Di-tert.-butyl-p-kresol und 9 g Lekutherm® X 20 (Epoxyharz) in 1 000 ml Toluol versetzt und über eine Ausdampfschnecke aufgearbeitet. Das erhaltene Pfropfpolymerisat hat die folgende Zusammensetzung : 44 % EVA, 5,5 % CP, 44,5 % polymerisierte Einheiten aus Vinylacetat und 6 % Polyesterurethan. Die Grenzviskosität [$\eta$] beträgt in Tetrahydrofuran bei 25 °C 1,48 [dl/g]. Eine bei 170 °C Preßtemperatur und 200 bar Preßdruck hergestellte Preßplatte ist hochtransparent und flexibel und weist keinerlei Weißbruch beim Biegen oder im Zugversuch auf.

Beispiel 12

In einem 8-l-Rührkessel wird eine Lösung von 675 g EVA, 170 g Polyester 1,20 g Hexamethylendiisocyanat, 253 g Vinylacetat, 340 g CP in 2 275 g tert. Butanol auf 80 °C erwärmt. Dann wird eine Lösung von 506 g Vinylacetat, 675 g tert. Butanol und 3,75 g tert. Butylperpivalat innerhalb von 2 Stunden hinzugegeben. Dann wird 3 Stunden bei 80 °C nachgerührt und das Reaktionsprodukt durch Fällen mit Wasser, Abstrippen der flüchtigen Anteile mit Wasserdampf, Filtration und Trocknung isoliert. Das Reaktionsprodukt hat die folgende Zusammensetzung : 35 % EVA, 18 % CB, 10 % Polyesterurethan und 37 % polymerisierte Einheiten aus Vinylacetat.

Herstellung der Formmassen

Beispiele 13 bis 25

Celluloseacetobutyrat mit 45 % Buttersäure- und 19 % Essigsäuregruppen wird mit den in der Tabelle 2 angegebenen Mengen der Copfropfpolymerisate auf einer Walze bei 170 °C intensiv vermischt, wobei die Summe beider Komponenten 100 % beträgt.

Die Walzfelle werden granuliert und anschließend bei einer Massetemperatur von 230 °C auf einer Spritzgußmaschine zu Prüfkörpern verspritzt.

in den Tabellen 2 und 3 bedeuten :

$a_n$ = Schlagzähigkeit nach DIN 53 453 in kJ/m²

$a_k$ = Kerbschlagzähigkeit nach DIN 53 453 in kJ/m²

Vicat = Erweichungstemperatur in °C nach DIN 53 460, Verfahren B, Kraft 49,05 NJ

$H_k^{30}$ = Kugeldruckhärte nach 30 s nach DIN 53 456 in N/mm²

Tabelle 2

| Beispiel | Copfropf-polymerisat | a) $/\%/$ | $a_n$ | | $a_k$ | Vicat $/°C/$ | $H_K^{30}$ |
|---|---|---|---|---|---|---|---|
| | | | Raum-temperatur | $-40\ °C$ | | | |
| 13 | 1 | 5 | 100-Ung. | 90 | 3,5 | 109 | 76,1 |
| 14 | 1 | 10 | Ung. b) | 110 | 5 | 105 | 71,6 |
| 15 | 2 | 10 | 100-Ung. | 90 | 4 | 104 | 72,2 |
| 16 | 3 | 10 | 90-Ung. | 75 | 3,5 | 104 | 72,8 |
| 17 | 4 | 10 | 95 | 82 | 3,6 | 107 | 72,9 |
| 18 | 5· | 10 | Ung. | 60 | 6,1 | 99 | 67,2 |
| 19 | 6 | 10 | Ung. | 80 | 6,3 | 98 | 66,6 |
| 20 | 7 | 10 | 89 | 59 | 3,0 | 107 | 71,9 |
| 21 | 8 | 10 | 91 | 68 | 3,9 | 107 | 72,2 |
| 22 | 9 | 10 | 90 | 85 | 3,7 | 106 | 71,0 |
| 23 | 10 | 10 | 80-Ung. | 75 | 3,6 | 105 | 71,7 |
| 24 | 11 | 10 | Ung. | 80-Ung. | 5,0 | 96 | 65,2 |
| 25 | 12 | 10 | Ung. | 80-Ung. | 5,7 | 99 | 67,2 |

a) bezogen auf die Polymermischung
b) Nicht gebrochen

0 054 860

Beispiele 26 bis 36

Celluloseacetopropionat enthaltend 57,5 % Propionsäure- und 5,5 % Essigsäuregruppen wird mit den in der Tabelle 3 angegebenen Mengen der Copfropfpolymerisate auf einer Walze bei 170 °C intensiv vermischt, wobei die Summe der Komponenten 100 % beträgt.

Die Walzfelle werden granuliert und anschließend bei einer Massetemperatur von 230 °C auf einer Spritzgußmaschine zu Prüfkörpern verspritzt.

(Siehe Tabelle 3 Seite 11 f.)

0 054 860

<div align="center">Tabelle 3</div>

| Beispiel | Copfropf-polymerisat | $[\%]$ a) | $a_n$ Raum-temperatur | $a_n$ −40 °C | $a_k$ | Vicat [°C] | $H_k$ 30 |
|---|---|---|---|---|---|---|---|
| 26 | 1 | 5 | 86 | 80 | 3,0 | 126 | 88,5 |
| 27 | 1 | 10 | Ung. | 97 | 4,7 | 124 | 82,9 |
| 28 | 2 | 10 | 100-Ung. | 75 | 3,6 | 119 | 83,9 |
| 29 | 3 | 10 | 85 | 75 | 3,6 | 119 | 84,8 |
| 30 | 4 | 10 | 90-Ung. | 86 | 4,2 | 119 | 84,0 |
| 31 | 5 | 10 | 105-Ung. | 88 | 3,7 | 119 | 84,9 |
| 32 | 6 | 10 | 105-Ung. | 103 | 4,2 | 116 | 83,4 |
| 33 | 7 | 10 | 86 | 55 | 3,2 | 119 | 82,1 |
| 34 | 9 | 10 | 85 | 58 | 3,4 | 118 | 80,6 |
| 35 | 11 | 10 | 100-Ung. | 95 | 3,8 | 117 | 82,3 |
| 36 | 12 | 10 | Ung. | 120 | 4,2 | 118 | 84,6 |

a) bezogen auf die Polymermischung
b) Nicht gebrochen

Beispiele 37 bis 41

Für die folgenden Abmischungen wird ein Copfropfpolymerisat 37 in Abänderung der Arbeitsweise des Beispiels 1 hergestellt. Die Abänderung besteht darin, daß der Polyester 1 nicht zur Synthese des Copfropfpolymeren eingesetzt wird, die übrigen Angaben der Rezeptur aber beibehalten werden. Man erhält ein Copfropfpolymerisat 37 mit der folgenden Zusammensetzung : 44,5 % EVA, 5,5 % CP und 50 % polymerisierte Einheiten aus Vinylacetat.

Nach der Arbeitsweise, wie sie für die Beispiele 13 bis 25 angegeben ist, werden Abmischungen aus dem Copfropfpolymerisat 37, Celluloseacetobutyrat und Polyester 1 hergestellt, wobei die Summe der Komponenten 100 % beträgt.

(Siehe Tabelle 4 Seite 13 f.)

Tabelle 4

| Beispiel | Copfropfpoly-merisat 37 | CB | Polyester 1 | $a_n$ | | $a_k$ | Vicat $[^oC]$ | $K_{II}$ 30 |
| | | | | R.T. | -40 °C | | | |
|---|---|---|---|---|---|---|---|---|
| 38 | 10 Tl. | 90 Tl. | – | Ung.[a] | 95 | 9,4 | 105 | 70,0 |
| 39 | } Mischung | | 0,5 Tl. | Ung. | 81 | 6,3 | 96 | 66,3 |
| 40 | } wie in Bei- | | 1,0 Tl. | Ung. | 85 | 8,1 | 96 | 65,1 |
| 41 | } spiel 38 | | 2,5 Tl. | Ung. | 93 | 8,4 | 90 | 64,2 |

a) Nicht gebrochen

0 054 860

**0 054 860**

## Vergleichsbeispiele

Celluloseacetobutyrat mit 45 % Buttersäure- und 19 % Essigsäuregruppen wird mit den in der Tabelle 4 angegebenen Mengen des Polyesters 1 auf einer Walze bei 170 °C intensiv vermischt, wobei die Summe beider Komponenten 100 % beträgt. Die Walzfelle werden granuliert und anschließend bei einer Massetemperatur von 230 °C auf einer Spritzgußmaschine zu Prüfkörpern verspritzt.

(Siehe Tabelle 5 Seite 15 f.)

Tabelle 5

| Vergleichs- beispiel | CB | Polyester 1 | $a_n$ | | $a_k$ | Vicat °C | $K^H_{30}$ |
|---|---|---|---|---|---|---|---|
| | | | Raumtem- peratur | -40 °C | | | |
| 1 | 95 | 5 | Ung. [a] | 91 | 2,1 | 95 | 72,6 |
| 2 | 90 | 10 | Ung. | 47 | 1,9 | 84 | 62,1 |
| 3 | 85 | 15 | Ung. | 22 | 1,7 | 74 | 51,5 |

a) Nicht gebrochen

**0 054 860**

## Patentansprüche

1. Thermoplastische Formmassen, bestehend aus
1) 1 bis 99 Gew.-% eines Pfropfsubstrates, das sich zusammensetzt aus
  a) 1 bis 99,5 Gew.-% eines Elastomeren mit einer Glasübergangstemperatur $\leqslant$ 0 °C und
  b) 0,5 bis 99 Gew.-% eines oder mehrerer Polyester, Polyether, Polyesterurethane, Polyetherurethane, Polycarbonate oder ihrer Gemische und gegebenenfalls
  c) 0 bis 95 Gew.-% eines Celluloseesters einer oder mehrerer aliphatischer $C_1$-$C_5$-Carbonsäuren, und
2) 99 bis 1 Gew.-% auf-polymerisierten Einheiten von
  a)100-80 Gew.-% Vinylestern und/oder $C_1$-$C_{18}$-Alkylestern der Acryl- und/oder Methacrylsäure und
  b) 0 bis 20 Gew.-% $C_2$-$C_4$-$\alpha$-Olefinen,
wobei mindestens ein Teil der polymeren Komponenten des Pfropfsubstrates über polymerisierte Einheiten der Pfropfmonomeren untereinander verbrückt ist und wobei die Summe der Komponenten 1 und 2, 1a) bis 1c) und 2a) und 2b) jeweils 100 Gew.-% beträgt.

2. Thermoplastische Formmassen, bestehend aus
I. 1 bis 99 Gew.-% eines Celluloseesters einer oder mehrerer aliphatischer $C_1$-$C_5$-Carbonsäuren und
II. 99 bis 1 Gew.-% eines Copfropfpolymerisates aus
1) 1 bis 99 Gew.-% eines Pfropfsubstrates, das sich zusammensetzt aus
  a) 1 bis 99,5 Gew.-% eines Elastomeren mit einer Glasübergangstemperatur $\leqslant$ 0 °C und
  b) 0,5 bis 99 Gew.-% eines oder mehrerer Polyester, Polyether, Polyesterurethane, Polyetherurethane, Polycarbonate oder ihrer Gemische und gegebenenfalls
  c) 0 bis 95 Gew.-% eines Celluloseesters einer oder mehrerer aliphatischer $C_1$ bis $C_5$-Carbonsäuren, und
2) 99 bis 1 Gew.-% auf-polymerisierten Einheiten von
  a) 100-80 Gew.-% Vinylestern und/oder $C_1$-$C_{18}$-Alkylestern der Acryl- und/oder Methacrylsäure und
  b) 0 bis 20 Gew.-% $C_2$-$C_4$-Olefinen,
wobei mindestens ein Teil der polymeren Komponenten des Pfropfsubstrates über polymerisierte Einheiten der Pfropfmonomeren untereinander verbrückt ist und wobei die Summe der Komponenten I und II, 1 und 2, 1a) bis 1c) und 2a) und 2b) jeweils 100 Gew.-% beträgt.

3. Thermoplastische Formmassen nach Anspruch 2, dadurch gekennzeichnet, daß sie bestehen aus
I) 50 bis 99 Gew.-% der Komponente I und
II) 1 bis 50 Gew.-% der Komponente II,
wobei die Summe der Komponenten I und II 100 Gew.-% beträgt.

4. Thermoplastische Formmassen nach Anspruch 1-3, dadurch gekennzeichnet, daß das Copfropfpolymerisat besteht aus
1) 15-95 Gew.-% des Pfropfsubstrates 1 und
2) 5-85 Gew.-% der polymerisierten Einheiten 2,
wobei die Summe der Komponenten 1 und 2 100 Gew.-% beträgt.

5. Thermoplastische Formmassen nach Anspruch 1-4, dadurch gekennzeichnet, daß das Pfropfsubstrat 1 sich zusammensetzt aus
a) 50 bis 97 Gew.-% der Komponente 1a,
b) 3 bis 50 Gew.-% der Komponente 1b und gegebenenfalls
c) 0 bis 45 Gew.-% der Komponente 1c,
wobei die Summe der Komponenten 1a) bis 1c) 100 Gew.-% beträgt.

6. Thermoplastische Formmassen nach Anspruch 1-5, dadurch gekennzeichnet, daß die Komponente 1a des Pfropfsubstrates ein Ethylen-Vinylacetat-Copolymerisat mit einem Vinylacetatgehalt von 5 bis 75 Gew.-% ist.

## Claims

1. Thermoplastic moulding compositions, consisting of
1) 1 to 99 % by weight of a graft substrate which is composed of
  a) 1 to 99.5 % by weight of an elastomer having a glass transition temperature $\leqslant$ 0 °C and
  b) 0.5 to 99 % by weight of one or more polyesters, polyethers, polyester urethanes, polyether urethanes, polycarbonates or mixtures thereof and, optionally,
  c) 0 to 95 % by weight of a cellulose ester of one or more aliphatic $C_1$-$C_5$-carboxylic acids and
2) 99 to 1 % by weight of grafted-on units of
  a) 100-80 % by weight of vinyl esters and/or $C_1$-$C_{18}$-alkyl esters of acrylic and/or methacrylic acid and
  b) 0 to 20 % by weight of $C_2$-$C_4$-$\alpha$-olefins,

at least some of the polymeric components of the graft substrate being bridged together by polymerised units of the graft monomers, and the sum of components 1 and 2, 1a) to 1c) and 2a) and 2b) being in each case 100 % by weight.

2. Thermoplastic moulding compositions, consisting of

I. 1 to 99 % by weight of a cellulose ester of one or more aliphatic $C_1$-$C_5$-carboxylic acids and

II. 99 to 1 % by weight of a co-graft polymer of

1) 1 to 99 % by weight of a graft substrate, which is composed of

a) 1 to 99.5 % by weight of an elastomer having a glass transition temperature $\leqslant 0$ °C and

b) 0.5 to 99 % by weight of one or more polyesters, polyethers, polyester urethanes, polyether urethanes, polycarbonates or mixtures thereof and, optionally,

c) 0 to 95 % by weight of a cellulose ester of one or more aliphatic $C_1$ to $C_5$-carboxylic acids, and

2) 99 to 1 % by weight of grafted-on units of

a) 100-80 % by weight of vinyl esters and/or $C_1$-$C_{18}$-alkyl esters of acrylic and/or methacrylic acid and

b) 0 to 20 % by weight of $C_2$-$C_4$-olefins,

at least some of the polymeric components of the graft substrate being bridged together by polymerised units of the graft monomers and the sum of components I and II, 1 and 2, 1a) to 1c) and 2a) and 2b) being in each case 100 % by weight.

3. Thermoplastic moulding compositions according to Claim 2, characterised in that they consist of

I) 50 to 99 % by weight of component I and

II) 1 to 50 % by weight of component II,

the sum of components I and II being 100 % by weight.

4. Thermoplastic moulding compositions according to Claim 1-3, characterised in that the co-graft polymer consists of

1) 15-95 % by weight of the graft substrate 1 and

2) 5-85 % by weight of the polymerised units 2,

the sum of components 1 and 2 being 100 % by weight.

5. Thermoplastic moulding compositions according to Claim 1-4, characterised in that the graft substrate 1 is composed of

a) 50 to 97 % by weight of component 1a,

b) 3 to 50 % by weight of component 1b and, optionally,

c) 0 to 45 % by weight of component 1c, the sum of components 1a) to 1c) being 100 % by weight.

6. Thermoplastic moulding compositions according to Claim 1-5, characterised in that component 1a of the graft substrate is an ethylene/vinyl acetate copolymer having a vinyl acetate content of 5 to 75 % by weight.

**Revendications**

1. Mélanges à mouler thermoplastiques, constitués par

1) 1 à 99 % en poids d'un substrat de greffage qui se compose de

a) 1 à 99,5 % en poids d'un élastomère ayant une température de transition vitreuse inférieure ou égale à O °C et

b) 0,5 à 99 % en poids d'un ou plusieurs polyesters, polyéthers, polyesteruréthannes, polyétheruréthannes, polycarbonates ou leurs mélanges et, le cas échéant

c) 0 à 95 % en poids d'un ester cellulosique d'un ou plusieurs acides carboxyliques aliphatiques en $C_1$ à $C_5$, et

2) 99 à 1 % en poids de motifs fixés par polymérisation, de

a) 100 à 80 % en poids d'esters de vinyle et/ou d'esters d'alkyle en $C_1$ à $C_{18}$ d'acide acrylique et/ou d'acide méthacrylique et

b) 0 à 20 % en poids d'α-oléfines en $C_2$ à $C_4$,

une partie au moins des composants polymériques du substrat de greffage étant pontés les uns avec les autres par l'intermédiaire de motifs polymérisés des monomères greffés et la somme des composants 1 et 2, 1a) à 1c) et 2a) et 2b) s'élevant dans chaque cas, à 100 % en poids.

2. Mélanges à mouler thermoplastiques, constitués par

I. 1 à 99 % en poids d'un ester cellulosique d'un ou plusieurs acides carboxyliques aliphatiques en $C_1$ à $C_5$ et

II. 99 à 1 % en poids d'un copolymère greffé de

1) 1 à 99 % en poids d'un substrat de greffage qui se compose de

a) 1 à 99,5 % en poids d'un élastomère à température de transition vitreuse inférieure ou égale à 0 °C et

b) 0,5 à 99 % en poids d'un ou de plusieurs polyesters, polyéthers, polyesteruréthannes, polyétheruréthannes, polycarbonates ou leurs mélanges et le cas échéant

c) 0 à 95 % en poids d'un ester cellulosique d'un ou plusieurs acides carboxyliques aliphatiques en $C_1$ à $C_5$, et

2) 99 à 1 % en poids de motifs fixés par polymérisation, de

a) 100-80 % en poids d'esters de vinyle et/ou d'esters d'alkyle en $C_1$ à $C_{18}$ d'acide acrylique et/ou d'acide méthacrylique et

b) 0 à 20 % en poids d'oléfines en $C_2$ à $C_4$,

une partie au moins des composants polymériques du substrat de greffage étant pontés entre eux par l'intermédiaire de motifs polymérisés des monomères greffés et la somme des composants I et II, 1 et 2, 1a) à 1c) et 2a) et 2b) s'élevant dans chaque cas à 100 % en poids.

3. Mélanges à mouler thermoplastiques suivant la revendication 2, caractérisés en ce qu'ils sont constitués par

I) 50 à 99 % en poids du composant I et

II) 1 à 50 % en poids du composant II,

la somme des composants I et II s'élevant à 100 % en poids.

4. Mélanges à mouler thermoplastiques suivant les revendications 1 à 3, caractérisés en ce que le copolymère greffé est constitué par

1) 15 à 95 % en poids du substrat de greffage 1 et

2) 5 à 85 % en poids des motifs polymérisés 2,

la somme des composants 1 et 2 s'élevant à 100 % en poids.

5. Mélanges à mouler thermoplastiques suivant les revendications 1 à 4, caractérisés en ce que le substrat de greffage 1 se compose de

a) 50 à 97 % en poids du composant 1a,

b) 3 à 50 % en poids du composant 1b et le cas échéant

c) 0 à 45 % en poids du composant 1c,

la somme des composants 1a) à 1c) s'élevant à 100 % en poids.

6. Mélanges à mouler thermoplastiques suivant les revendications 1 à 5, caractérisés en ce que le composant 1a du mélange de greffage est un copolymère éthylène-acétate de vinyle à teneur en acétate de vinyle de 5 à 75 % en poids.